# EUROPÄISCHE PATENTSCHRIFT

(11) **EP 2 866 916 B1**
(45) Veröffentlichungstag und Bekanntmachung des Hinweises auf die Patenterteilung: **30.12.2015**
(21) Anmeldenummer: 14761954.8
(22) Anmeldetag: 06.09.2014
(51) Int. Cl.: B01D 46/00

(54) **FILTERVORRICHTUNG ZUR TROCKENABSCHEIDUNG VON KLEBENDEN PARTIKELN**
FILTER DEVICE FOR THE DRY SEPARATION OF ADHESIVE PARTICLES
DISPOSITIF DE FILTRATION POUR LA SÉPARATION À SEC DE PARTICULES ADHÉSIVES

(30) Priorität: 19.09.2013 DE 102013015486
(43) Veröffentlichungstag der Anmeldung: 06.05.2015
(73) Patentinhaber: Rippert Besitzgesellschaft mbH & Co. KG, 33442 Herzebrock-Clarholz (DE)
(72) Erfinder: SCHÖNING, Thomas, 33442 Herzebrock-Clarholz (DE)
(74) Vertreter: Thielking & Elbertzhagen Patentanwälte Partnerschaft mbB
(86) Internationale Anmeldenummer: PCT/EP2014/002422
(87) Internationale Veröffentlichungsnummer: WO 2015/039735

(56) Entgegenhaltungen:
- EP-B1- 0 875 275
- GB-A- 2 382 042
- SU-A1- 1 738 307
- US-A1- 2008 282 656

## Beschreibung

### Technisches Gebiet

Die Erfindung betrifft eine Filtervorrichtung zur Trockenabscheidung von klebenden Partikeln, wie sie in einem Gas oder Luftstrom aus einem Nasslackierungsprozess in einer Nasslackierungsanlage entnommen werden.

### Stand der Technik

In Nasslackierungsanlagen entstehen Lackreste im aus dem Lackierprozess kommenden Gas- oder Luftstrom. Dieser mit klebrigen Lackpartikeln beladene Strom wird über geeignete Filtereinrichtungen gereinigt. Aus EP 875 275 B1 ist eine gattungsgemäße Filtervorrichtung bekannt. Diese umfasst eine Mehrzahl drehbare, mit der Drehachse parallel zueinander angeordnete Bürstenwalzen, deren Borsten miteinander kämmen. Diese Anordnung aus Bürstenwalzen wird vom genannten Gas- oder Luftstrom angeströmt, wobei die Lackreste an den Walzen bzw. deren Borsten kleben bleiben und so aus dem die Anordnung penetrierenden Gas- oder Luftstrom entfernt werden. In der Regel bei Stillstand der Anlage werden die Bürstenwalzen abgereinigt, indem sie gedreht und mit den Borsten an einem Abstreifer vorbei geführt werden, so dass die an den Borsten anhaftenden Lackreste infolge der Schwerkraft herunterfallen und entsorgt werden. Besonders vorteilhaft ist es dabei, wenn die Borsten elastisch ausgebildet sind, da sie dann beim Überfahren des Abstreifers unter Spannung ausgelenkt werden und anschließend zurückschnellen und so etwaige anhaftende Partikel abwerfen.

Diese Vorrichtung der gattungsgemäßen Art hat sich in der Praxis bewährt. Allerdings gibt es Lackiersysteme, bei denen Nasslacke mit sehr hoher Haftfestigkeit eingesetzt werden oder bei denen sehr große Mengen an Nasslackresten die Filteranordnungen passieren. Der Reinigungsvorgang der Bürstenwalzen muss dann häufig über mehrere Stunden durchgeführt werden, wodurch ein gewisser Stillstand der Anlagen nicht zu vermeiden ist.

In diesen Fällen kommt es gelegentlich dazu, dass die gattungsgemäße Vorrichtung an ihre Grenzen stößt.

### Die Erfindung

Aufgabe der vorliegenden Erfindung ist es daher, eine Filtervorrichtung der gattungsgemäßen Art anzugeben, bei der die erwähnten Nachteile zumindest weitgehend vermieden werden.

Gelöst wird diese Aufgabe durch eine Filtervorrichtung mit den Merkmalen des Anspruchs 1. Vorteilhafte Ausführungsformen finden sich in den Unteransprüchen.

Die Erfindung beruht auf dem Gedanken, die Haftfestigkeit der abzuscheidenden Lacke auf den Bürstenwalzen herabzusetzen. Dies geschieht in der Art, dass die Bürstenwalzen oder jedenfalls die Borsten mit einer haftreduzierenden Beschichtung beschichtet sind. Somit wird die Haftung des Lackmaterials an den Bürstenwalzen gemindert. Auf diese Weise haften die Lackreste zwar noch an den Bürstenwalzen an, es lassen sich Lackreste auch mit eigener hoher Haftfestigkeit ohne weiteres abstreifen und auch große Mengen an Lackoverspray können verarbeitet werden.

Mit der erfindungsgemäßen Lösung laufen Reinigungsvorgänge teilweise innerhalb von Minuten ab, anstelle von einigen Stunden bei stark haftenden Lacken, so dass die Filtervorrichtung mehr oder weniger sofort wieder einsatzfähig ist.

Für die Beschichtung bieten sich mehrere Möglichkeiten an. Insbesondere kann dabei vorgesehen sein, dass die Beschichtung eine durch einen Abscheidungsprozess, insbesondere durch elektrische Abscheidung, auf die Bürstenwalzen aufgebrachte Beschichtung ist. Abscheidungsprozesse, insbesondere elektrische, bilden in der Regel eine sehr homogene Beschichtung aus, mit der sich auch Strukturen mit weniger homogener Oberfläche gut beschichten lassen.

Eine besonders vorteilhafte Ausführungsform der Erfindung sieht vor, dass es sich bei der Beschichtung um eine Pulverbeschichtung, insbesondere um eine Pulverlackbeschichtung, handelt. Es hat sich herausgestellt, dass diese Art der Beschichtung sehr gute Ergebnisse erzielt, wobei besonders Lackpulver geeignet ist, welches als Abfallprodukt aus einem Pulverlackbeschichtungsprozess gewonnen wurde. Zum Einen verfügt dies über eine besonders feine Körnung, welche eine homogene Beschichtung der Borsten ermöglicht, zum Anderen ist dieses Material bei vielen Unternehmen, die Teile beschichten, verfügbar. Damit kann das überschüssige Lackpulver wiederverwendet und braucht daher nicht kostenintensiv entsorgt zu werden.

Nach dem Pulverauftrag kann sofort mit dem normalen Lackierprozess begonnen werden, d.h. der nicht vom zu lackierenden Objekt aufgenommene Nasslack, sog. Overspray, legt sich auf die aufgebrachte Pulverschutzschicht an den Bürstenwalzen.

Die Bürstenwalzen können nach Ausbau aus der Filtervorrichtung beschichtet werden oder noch günstiger bei der Beschichtung in der Filtervorrichtung verbleiben. Insbesondere kann dabei vorgesehen sein, dass die Filtervorrichtung eine automatische Beschichtungsvorrichtung, insbesondere eine Pulverbeschichtungsvorrichtung, zur Beschichtung der Bürstenwalzen aufweist. Ebenfalls kann dieser Vorgang manuell durchgeführt werden. Nach dem Filterprozess und dem Abreinigen der Bürstenwalzen ist es so möglich, die Beschichtung der Bürstenwalzen innerhalb der Anlage durchzuführen, so dass lange Stillstandzeiten vermieden werden.

Damit das Abreinigen vereinfacht wird, sind die Bürstenwalzen, insbesondere die Borsten, wenigstens teilweise aus einem Kunststoffmaterial gebildet. So verfügen die Borsten über die zum Abreinigen vorteilhafte elastische Verformbarkeit.

Bevorzugt ist dabei vorgesehen, dass das Kunststoffmaterial eine elektrisch leitende Substanz, z.B. Kohlenstoff oder Metall, aufweist. So lassen sich elektrische Beschichtungsprozesse, insbesondere die Pulverlackbeschichtung, noch effektiver an den Bürstenwalzen durchführen. Die haftabweisende Beschichtung der Bürstenwalzen haftet so noch besser an den Bürstenwalzen und muss nicht so oft erneuert werden. Dadurch wird die Lebensdauer der Bürstenwalzen erhöht.

Die Erfindung betrifft ferner eine Nassbeschichtungsanlage gemäß Anspruch 8.

Die Erfindung wird nachfolgend anhand der Zeichenfiguren 1 und 2 näher erläutert.

### Kurzbeschreibung der Zeichnungen

Figur 1 zeigt eine Draufsicht auf die erfindungsgemäße Filtervorrichtung.
Figur 2 zeigt eine Ansicht der angeströmten Seite der erfindungsgemäßen Filtervorrichtung.

Die in den Figuren dargestellte erfindungsgemäße Filtervorrichtung kann insbesondere Teil einer ebenfalls erfindungsgemäßen Nassbeschichtungsanlage sein.

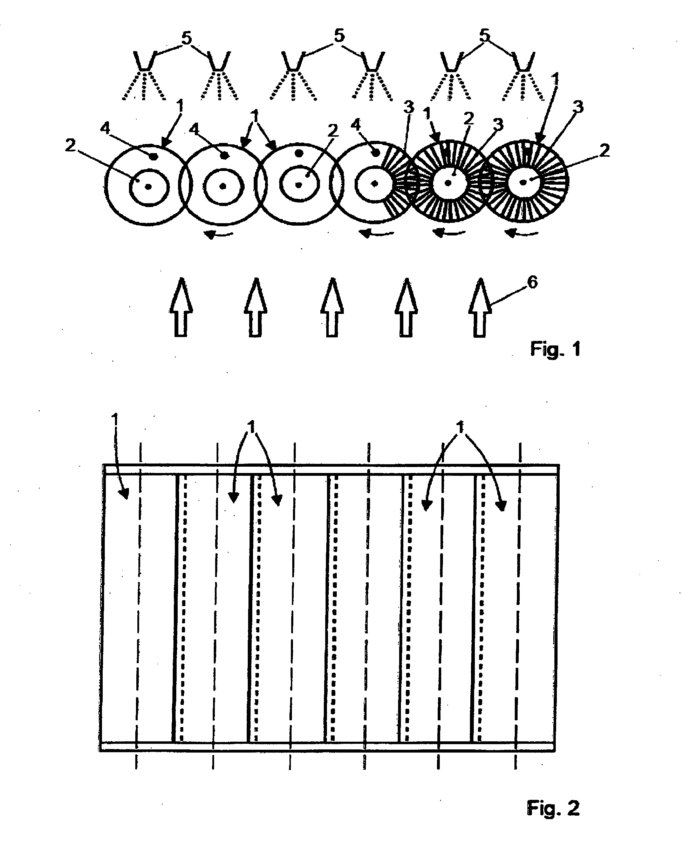

Die beispielhaft abgebildete Filtervorrichtung weist eine Mehrzahl von in einer Reihe nebeneinander angeordneten Bürstenwalzen 1 auf, die je einen zentralen Bürstenkörper 2 aufweisen, an dem rundum in radialer Richtung vorstehend eine Vielzahl von Borsten 3 angeordnet ist. Jeweils zwei der benachbarten Bürstenwalzen 1 sind im gezeigten Beispiel gleichläufig miteinander angetrieben und kämmen mit ihren Borsten 3, die folglich einander überlappend ineinandergreifen. Jeweils zwischen zweien der Bürstenkörper 2 befindet sich eine Durchlasszone für einen Gasstrom, insbesondere aus einem Luftstrom, welcher aus einem Nasslackierprozess kommt, und aus dem Lackpartikel abzuscheiden sind. Die Richtung dieses Gas- oder Luftstroms ist in Figur 1 durch Pfeile 6 angedeutet, die jeweils auf eine der genannten Durchlasszonen ausgerichtet sind. Im Bereich dieser Durchlasszone durchlaufen die Borsten 3 an den Bürstenkörpern 2 eine Position, in der sie quer oder doch zumindest im Wesentlichen quer zu dem durchdringenden Gas- oder Luftstrom ausgerichtet sind, weswegen in der Durchlasszone der Gas- oder Luftstrom an den Borsten 3 mehrfach umgelenkt wird, also einen Strömungswiderstand erfährt, wodurch insbesondere die im Gas- oder Luftstrom mitgeführten Partikel verzögert werden, damit sie sich an den Borsten 3 absetzen können.

Erfindungsgemäß ist nun vorgesehen, dass die Borsten 3, oder auch die gesamten Bürstenwalzen 1, mit einer hinsichtlich der Nasslackpartikel haftmindernden Beschichtung versehen sind. Die Bürstenwalzen 1 bestehen dabei vorzugsweise aus Kunststoff - z.B. PP -, der ggf. weitere Materialien enthalten kann, beispielsweise elektrisch leitende Materialien. Dies hat den Vorteil, dass als Beschichtungen unter Zuhilfenahme von Elektrizität abscheidbare Beschichtungen für die Bürstenwalzen eingesetzt werden können. Hier bieten sich z.B. die Pulverlackbeschichtungen an, die über einen Sprühauftrag am Substrat (hier der Bürstenwalze) abgeschieden werden können. Die erfindungsgemäße Vorrichtung kann dazu bereits ein oder mehrere Sprühauftrags- oder Beschichtungseinrichtungen aufweisen, wie etwa durch die Bezugszahl 5 in der Figur 1 angedeutet. Natürlich sind auch andere nichtelektrisch abzuscheidende Beschichtungen möglich, diese werden jedoch hinsichtlich ihrer Haftung an der Bürstenwalze 1 nachteilig, da die Beschichtung dann häufiger erneuert werden muss. Genauso kann die Beschichtung auch von Hand aufgebracht werden oder mit einer Sprühpistole.

Gelegentlich muss die Beschichtung erneuert werden, da die Beschichtung durch den Abstreifvorgang einem gewissen Verschleiß durch mechanische Reibung unterliegt, wenn die Bürstenwalzen rotieren. Auch aus diesem Grund ist ein Vorsehen einer Beschichtungseinrichtung 5 direkt in der Filtervorrichtung oder wenigstens in der Nassbeschichtungsanlage vorteilhaft, da so lange Stillstandzeiten zum Wiederauffrischen der Beschichtung vermieden werden können.

Die Rotation der Bürstenwalzen 1 sorgt dafür, dass die Borsten 3 an den Bürstenkörpern 2 ständig ihre Position wechseln, was die Abscheidewirkung der Nasslackpartikel an den Borsten 3 begünstigt. Zudem kann hierdurch auch eine mechanische Abreinigung der Borsten 3 erzielt werden, die aus einem elastisch verformbaren Material, wie Kunststoff, bestehen. Parallel zu den Bürstenkörpern 2 können deshalb als Abstreifer 4 dienende Stangen installiert sein, die in radialer Richtung einen Abstand von den Bürstenkörpern 2 haben, der kleiner als die Länge der Borsten 3 ist. Dadurch müssen sich die Borsten 3 infolge der Rotation der Bürstenwalzen 1 ständig an den Abstreifern 4 unter elastischer Verbiegung vorbeidrängen, womit ein Abstreif- und Absprengvorgang bezüglich der an den Borsten 3 anhaftenden Partikel erzwungen wird. Damit die abgereinigten Nasslackpartikel nicht an der Abluftseite des Filtermediums in den gereinigten Gas- oder Luftstrom gelangen, kann die durch Rotation der Bürstenwalzen 1 bewirkte Abreinigung diskontinuierlich vorgenommen werden, solange eine Beaufschlagung des Filtermediums durch einen zu reinigenden Gas- oder Luftstrom nicht erfolgt. Zum Anderen können die Bürstenwalzen 1 auch kontinuierlich sehr langsam angetrieben werden, damit die aus dem zu reinigenden Gas- oder Luftstrom abgeschiedenden Nasslackpartikel auf den Borsten 3 eine auf der erfindungsgemäßen Beschichtung befindliche Schicht bilden, die dann beim Vorbeistreifen an den Abstreifern 4 in größeren Stücken abgesprengt wird, die nicht vom zu reinigenden Gas- oder Luftstrom über eine größere Distanz mitgerissen werden können.

## Patentansprüche

1. Filtervorrichtung zur Trockenabscheidung von klebenden Partikeln, insbesondere Farbpartikeln, aus einem Gasstrom, insbesondere aus einem Luftstrom, wobei die Filtervorrichtung eine Mehrzahl jeweils mit Borsten (3) versehene durch den Gasstrom angeströmte Bürstenwalzen (1) aufweist,
**dadurch gekennzeichnet,**
**dass** die Bürstenwalzen (1) vollständig oder teilweise mit einer haftreduzierenden Beschichtung beschichtet sind.

2. Filtervorrichtung nach Anspruch 1,
**dadurch gekennzeichnet,**
**dass** die Beschichtung eine durch einen Abscheidungsprozess, insbesondere durch elektrische Abscheidung, auf die Bürstenwalzen (1) aufgebrachte Beschichtung ist.

3. Filtervorrichtung nach Anspruch 1 oder 2,
**dadurch gekennzeichnet,**
**dass** es sich bei der Beschichtung um eine Pulverbeschichtung handelt.

4. Filtervorrichtung nach Anspruch 1 oder 2,
**dadurch gekennzeichnet,**
**dass** es sich bei der Beschichtung um eine Pulverlackbeschichtung handelt.

5. Filtervorrichtung nach einem der vorigen Ansprüche,
**dadurch gekennzeichnet,**
**dass** die Filtervorrichtung eine Beschichtungsvorrichtung (5), insbesondere eine Pulverbeschichtungsvorrichtung, zur Beschichtung der Bürstenwalzen (1) aufweist.

6. Filtervorrichtung nach einem der vorigen Ansprüche,
**dadurch gekennzeichnet,**
**dass** die Bürstenwalzen (1) wenigstens teilweise aus einem Kunststoffmaterial bestehen.

7. Filtervorrichtung nach einem der vorigen Ansprüche,
**dadurch gekennzeichnet,**
**dass** die Borsten (3) wenigstens teilweise aus einem Kunststoffmaterial bestehen.

8. Filtervorrichtung nach Anspruch 6 oder 7,
**dadurch gekennzeichnet,**
**dass** das Kunststoffmaterial eine elektrisch leitende Substanz, z. B. Kohlenstoff oder Metall, aufweist.

9. Filtervorrichtung nach einem der vorigen Ansprüche,
**dadurch gekennzeichnet,**
**dass** wenigstens eine Abstreifeinrichtung (4) im radialen Erstreckungsbereich der Borsten (3) der Bürstenwalzen (1) vorgesehen ist.

10. Filtervorrichtung nach einem der vorigen Ansprüche,
**dadurch gekennzeichnet,**
**dass** die Bürstenwalzen (1) im Bereich der Borsten (3) mit einer haftreduzierenden Beschichtung beschichtet sind.

11. Nassbeschichtungsanlage mit einer Filtervorrichtung nach einem der vorigen Ansprüche, die so angeordnet ist, dass sie im Strömungsweg (6) des Lackpartikel beinhaltenden Prozessgases liegt welches aus dem Nassbeschichtungsprozess auf die Filtervorrichtung trifft.

## Claims

1. Filter device for the dry separation of adhesive particles, in particular paint particles, from a gas flow, in particular from an air flow, wherein the filter device has a plurality of brush rollers (1) each provided with brushes (3), through which the gas flow flows,
**characterised in that**
the brush rollers (1) are coated completely or partially with an adhesion-reducing coating.

2. Filter device according to claim 1,
**characterised in that**
the coating is a coating applied by a deposition process, in particular by electrical deposition, to the brush rollers (1).

3. Filter device according to claim 1 or 2,
**characterised in that**
the coating is a powder coating.

4. Filter device according to claim 1 or 2,
**characterised in that** the coating is a powder paint coating.

5. Filter device according to one of the preceding claims,
**characterised in that**
the filter device has a coating device (5), in particular a powder coating device, for coating the brush rollers (1).

6. Filter device according to one of the preceding claims,
**characterised in that**
the brush rollers (1) are made at least partially from a plastic material.

7. Filter device according to one of the preceding claims,
**characterised in that**
the brushes (3) are made at least partially from a plastic material.

8. Filter device according to claim 6 or 7,
**characterised in that**
the plastic material has an electrically conductive substance, e.g. carbon or metal.

9. Filter device according to one of the preceding claims,
**characterised in that**
at least one stripping means (4) is provided in the radial extension region of the brushes (3) of the brush rollers (1).

10. Filter device according to one of the preceding claims,
**characterised in that**
the brush rollers (1) are coated in the region of the brushes (3) with an adhesion-reducing coating.

11. Wet coating installation with a filter device according to one of the preceding claims, which is arranged so that it lies in the flow path (6) of the process gas containing paint particles, which comes out of the wet coating process onto the filter device.

## Revendications

1. Dispositif de filtration pour la séparation à sec de particules visqueuses, en particulier de particules de matières colorantes, à partir d'un flux gazeux, sachant que le dispositif de filtration présente une pluralité de rouleaux brosses (1), dotés chacun de poils de brosserie (3), qui sont entraînés par le courant gazeux,
**caractérisé en ce que**
les rouleaux brosses (1) sont complètement ou partiellement enduits d'un revêtement qui réduit l'adhérence.

2. Dispositif de filtration selon la revendication 1,
**caractérisé en ce que**
le revêtement est un revêtement qui est appliqué sur les rouleaux brosses (1) par un processus de séparation, en particulier par séparation électrique.

3. Dispositif de filtration selon revendication 1 ou 2,
**caractérisé en ce que**
le revêtement est un revêtement par poudre.

4. Dispositif de filtration selon revendication 1 ou 2,
**caractérisé en ce que**
le revêtement est un revêtement de laque pulvérulente.

5. Dispositif de filtration selon l'une des revendications précédentes,
**caractérisé en ce que**
le dispositif de filtration présente, pour le revêtement des rouleaux brosses (1), un dispositif de revêtement, en particulier un dispositif de revêtement par poudre.

6. Dispositif de filtration selon l'une des revendications précédentes,
**caractérisé en ce que**
les rouleaux brosses (1) consistent au partiellement en matière synthétique.

7. Dispositif de filtration selon l'une des revendications précédentes,
**caractérisé en ce que**
les poils de brosserie (3) consistent au moins partiellement en matière synthétique.

8. Dispositif de filtration selon revendication 6 ou 7,
**caractérisé en ce que**
la matière synthétique présente une substance conductrice d'électricité, comme, par exemple, du carbone ou du métal.

9. Dispositif de filtration selon l'une des revendications précédentes,
**caractérisé en ce que**
au moins un dispositif de raclage (4) est prévu dans la région de la projection radiale des poils de brosserie (3) des rouleaux brosses (1).

10. Dispositif de filtration selon l'une des revendications précédentes,
**caractérisé en ce que**
les rouleaux brosses (1) sont pourvus, dans la région des poils de brosserie (3), d'un revêtement qui réduit l'adhésion.

11. Dispositif de revêtement par voie humide avec un dispositif de filtration selon l'une des revendications précédentes, lequel est disposé de manière à se trouver dans le trajet du flux gazeux qui contient des particules de laque et tombe sur le dispositif de filtration.
